# EUROPÄISCHE PATENTSCHRIFT

(11) **EP 2 179 653 B1**
(45) Veröffentlichungstag und Bekanntmachung des Hinweises auf die Patenterteilung: **10.04.2013**
(21) Anmeldenummer: 09174203.1
(22) Anmeldetag: 27.10.2009
(51) Int. Cl.: A21B 1/00, A21B 1/26, A23B 4/005, A23L 1/318, A23L 3/00, A23B 4/06, A23B 4/07, A23B 4/16, A23L 3/3418, A22C 17/00, A23L 1/31, A23B 4/00

(54) **Temperiertunnel und Verfahren zu seinem Betrieb**
Tempering tunnel and method for operation of the same
Tunnel d'équilibrage des températures et son procédé de fonctionnement

(30) Priorität: 27.10.2008 DE 102008053332
(43) Veröffentlichungstag der Anmeldung: 28.04.2010
(73) Patentinhaber: Völkl, Thomas, 83052 Bruckmühl (DE)
(72) Erfinder: Völkl, Thomas, 83052 Bruckmühl (DE)
(74) Vertreter: Alber, Norbert

(56) Entgegenhaltungen:
- GB-A- 645 246
- US-A- 5 398 666
- US-A- 5 423 248
- US-A- 5 671 660
- US-A- 5 976 005
- US-A- 6 012 381

## Beschreibung

### I. Anwendungsgebiet

Die Erfindung betrifft einen Temperiertunnel zum Temperieren von Produkten wie etwa Fleischstücken, die in Kisten gestapelt auf Paletten angeordnet sind.

### II. Technischer Hintergrund

Vor allem bei der Fleischverarbeitung, aber auch in anderen Bereichen der Lebensmittelverarbeitung, besteht häufig das Problem, dass Produkte für den nächsten anstehenden Bearbeitungsschritt auf eine definierte Temperatur gebracht werden müssen.

So muss beispielsweise tiefgefrorenes Fleisch für das Aufschneiden in Scheiben auf eine Temperatur im Kern des Fleischstückes von -2°C gebracht werden oder Produkte sollen von Umgebungstemperatur in einem Tiefkühlraum auf -20° C gefrostet werden.

Eine Kerntemperatur von -2° C wird bisher z. B. dadurch erreicht, dass die auf Norm-Paletten gestapelten, ebenfalls genormten, Kisten (z.B. E1- oder E2-Kisten) mit den Produkten in einen normalen Kühlraum gestellt werden, in dem + 2°C herrschen. Darin müssen sie mindestens einen, in der Regel sogar zwei oder drei, Tage stehen, um auf die gewünschte Kerntemperatur zu kommen, da die kühle Luft im Kühlraum zum einen so gut wir gar nicht, zirkuliert und damit eine geringe Strömungsgeschwindigkeit besitzt, und zum anderen nur in geringem Maße durch die Durchlässe in den Seitenwänden der Kisten beziehungsweise zwischen den gestapelten Kisten zu dem darin liegenden Fleisch vordringt, und primär nur entlang der Außenseiten der gestapelten Kisten strömt.

Deshalb werden die Kisten-Stapel auf Abstand zueinander gesetzt.

Zum einen belegt dies viel Raum in den teuren Kühlräumen, zum anderen erfordert diese eine lange Vorlaufzeit und eine lange Vorplanung der gesamten Produktion und bedingt dadurch eine geringe Flexibilität. Des Weiteren geht durch die lange Verweilzeit im Kühlraum und die dortige Luftumwälzung Saft aus dem Fleisch verloren, vor allem in den Außenbereichen der Kisten-Stapel, was durch den dadurch bedingten Gewichtsverlust einen Wertverlust darstellt. Auch kann ein Temperaturgefälle innerhalb der Kisten-Stapel von außen nach innen nicht vermieden werden.

Es ist daher bereits bekannt, Paletten - damit sind im folgenden immer mit übereinander gestapelten Kisten beladene Paletten gemeint, in denen sich die zu behandelnden Produkte wie etwa Fleischstücke befinden - mithilfe so genannter Temperiertunnel, die in dem Kühl-Raum mit der gewünschten oder der annähernd gewünschten Soll-Temperatur aufgestellt werden, schneller auf die gewünschte definierte Temperatur zu bringen.

Zu diesem Zweck werden meist mehrere Paletten hintereinander in ein vorne offenes, geringfügig größeres Gehäuse hineingefahren und anschließend mittels eines Gebläses aktiv die Umgebungsluft des z.B. Kühlraumes durch dieses Tunnel-artige Gehäuse hindurch bewegt. Dadurch ist insgesamt die Strömungsgeschwindigkeit der Luft wesentlich höher und vor allem wird ein sehr viel schnellerer Luftaustausch durch die Durchlässe hindurch im Inneren der Kisten bewirkt und damit die Temperierung der dort liegenden Produkte beschleunigt.

### III. Darstellung der Erfindung

### a) Technische Aufgabe

Es ist daher die Aufgabe gemäß der Erfindung, derartige Temperiertunnel sowie das Verfahren zu ihrem Betrieb zu verbessern.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Das Temperieren der in den Kisten befindlichen Produkte wird wesentlich beschleunigt, indem sich zumindest die Wände, besser auch das Dach, dicht an die Außenseite beziehungsweise Oberseite der gestapelten Kisten anlegen, wenn die Kisten mit Umgebungsluft aus dem z. B. Kühlraum angeströmt werden, da die Luft dann zwangsweise durch die Zwischenräume in die Kisten strömen muss.

Gleichzeitig muss jedoch beim Beladen des Temperiertunnels der freie Abstand zwischen den Seitenwänden deutlich größer als die Breite der einzufahrenden Paletten sein, da sonst das Einfahren zu langsam vor sich geht und die Wände lichtbeschädigt würden.

Beides zusammen lässt sich auf einfache Art und Weise dadurch erreichen, dass zum einen die Wände in Querrichtung so beweglich sind, dass sie sich an die Außenflächen der gestapelten Kisten heranbewegen und anlegen können und andererseits das Anströmen mit Umgebungsluft mittels einer stromabwärts der Kisten angeordneten Unterdruck-Quelle, beispielsweise eines Saug-Gebläses, bewirkt wird:

Wenn dieses Gebläse ausreichend stark dimensioniert ist, so dass es mehr Luft ansaugen kann als durch die Durchlässe in den Frontwänden und Rückwänden der Kisten alleine hindurchströmen kann (deren Anteil deshalb begrenzt sein sollte), wird durch den im Kisten-Stapel entstehenden Unterdruck die Wand an den Kisten-Stapel herangesaugt und ebenso das Dach an die Oberseite, wenn diese ausreichend beweglich ausgebildet sind.

Dazu beaufschlagt das Saug-Gebläse einen rückseitigen Gebläsekasten mit Unterdruck, der das bis auf das Saug-Gebläse geschlossene Ende des Temperiertunnels bildet, und der sich im Wesentlichen über die gesamte Höhe und Breite des Stapels von Kisten erstreckt und dem offenen vorderen Ende des Tunnels gegenüberliegt.

Dabei reicht der Gebläsekasten maximal bis zur Unterkante der untersten Palette des Stapels herab, um zu vermeiden, dass aus dem Bereich unterhalb der Kisten, nämlich durch die Hohlräume in den Paletten hindurch, Umgebungsluft entlang des Tunnels in den Gebläsekasten gesaugt wird. Natürlich müssen die hintersten Kisten dicht an die Seitenkanten des insbesondere vorne vollständig offenen Gebläse-Kastens angelegt werden.

Um den Temperiertunnel so kostengünstig und einfach wie möglich zu gestalten, bestehen die Wände und/oder das Dach entweder aus beweglich an einem Rahmen befestigten dünnen, isolierenden Platten oder noch besser aus einer Folie, die vom hinteren Ende zum vorderen Ende einmal als Seitenwand, das andere Mal als Dach, gespannt ist und von einem Rahmen getragen werden.

Dabei schließen das Dach und die Wände natürlich möglichst dicht aneinander an und ebenso setzen die Wände einerseits möglichst dicht am Rahmen an und andererseits sitzt der Rahmen möglichst dicht auf dem Untergrund auf.

Aus Stabilitäts-Gründen ist oft in der Nähe des vorderen, offenen Endes eine flache Querstrebe unmittelbar über dem Untergrund zwischen den beiden Seiten des Rahmens angeordnet, die nur bei ausreichend eigenstabilem Rahmen weggelassen werden kann, um das Einfahren von beladenen Paletten in den Temperiertunnel zu erleichtern.

Obwohl ein solcher Temperiertunnel in der Regel in einer Umgebung aufgestellt wird, dessen Temperatur etwa der Soll-Temperatur der Produkte entspricht, werden diese Temperiertunnel andererseits auch dazu benutzt, um bereits temperierte Produkte in einer Umgebung mit abweichender Temperatur möglichst lange auf der Ausgangs-Temperatur zu halten.

Dann wird selbstverständlich das Gebläse nicht in Gang gesetzt, da dies die dann unerwünschte Temperaturveränderung der Produkte nur beschleunigen würde, sondern der Temperiertunnel dient - bei ausgeschaltetem Gebläse - lediglich der Isolierung des Inhaltes des Temperiertunnels.

Für diese Fälle sollen Wände und Dach des Temperiertunnels isolierend wirken. Im Falle von Platten bestehen die Platten also aus einem gut wärmeisolierenden Material. Im Falle von Folie ist jede Wand und vorzugsweise auch das Dach aus zwei Lagen von Folie gebildet, die zueinander auf Abstand gehalten werden, so dass die Luftschicht zwischen den Lagen als isolierende Schicht wirkt, oder aus Isolierfolie.

In einer bevorzugten Ausführungsform bestehen die beiden Lagen der Folie z. B. der Wand aus einer einzigen Folie, die um eine dann vertikale Umlenkstrebe nahe des vorderen Endes des Tunnels herum gelegt ist und deren freie Enden am hinteren Ende des Temperiertunnels, insbesondere am Gebläsekasten, befestigt sind.

Dabei ist zumindest an einem der Enden der Folie eine Vorrichtung zum LängenAusgleich vorgesehen, beispielsweise die Befestigung mittels in Längsrichtung verlaufender Zugfedern realisiert.

Die Wand aus zwei Folien-Lagen kann ferner dazu benutzt werden, dass sich im Temperierbetrieb jede Folien-Lage an einem benachbarten Kisten-Stapel anlegt.

Deshalb können Temperier-Tunnel seitlich aneinandergereiht werden, von denen nur der erste zwei Seitenwände, nämlich die beschriebenen zweilagigen Folien-Seitenwände besitzt, die angrenzenden Temperiertunnel jedoch nur eine von zwei Seitenwänden, und mit ihrem Dach und Gebläsekasten dicht an dem vorhergehenden Tunnel seitlich angestellt werden.

Damit auch beim Ansaugen der Folie an den Stapel von Kisten die beiden Lagen der Folie ihren Abstand zueinander einhalten, sind vorzugsweise dazwischen Abstands-Rippen oder -Noppen angeordnet, die auf wenigstens einem der Folienabschnitte aufgebracht sind und vorzugsweise vertikal verlaufen, um Schmutzablagerungen zu verhindern.

Des Weiteren ist die Umlenkstrebe, die am vorderen Ende des Temperiertunnels vertikal verläuft, in Querrichtung verschwenkbar um eine ebenfalls vertikal verlaufende Schwenkachse ausgebildet, die beispielsweise am Rahmen befestigt ist. Dadurch kann das vordere Ende der Folien-Wand sowohl nach innen, Richtung Innenraum des Temperiertunnels, als auch nach außen verschwenkt werden.

Vor allem die Ausweichmöglichkeit nach außen ist notwendig, um das vordere Ende der Wand nicht zu beschädigen, wenn mittels eines Hub-Staplers oder eines ähnlichen Arbeitsgerätes eine beladene Palette in den Temperiertunnel hineingefahren wird, die dabei nicht immer exakt senkrecht steht wegen der oft unebenen Böden in derartigen Verarbeitungsbetrieben.

Die Schwenkachse kann jedoch darüber hinaus für weitere Zwecke benutzt werden:

Wenn die Schwenkachse um 90° nach innen, also Richtung Innenraum, geschwenkt werden kann, und ihr Abstand von der Schwenkachse der halben Breite des Innenraumes entspricht, kann dadurch das vordere, sonst offene Ende des Temperiertunnels verschlossen werden, was für die oben beschriebene, reine Isolier-Funktion vorteilhaft ist.

Wenn zusätzlich zu der Umlenkstrebe auf der bezüglich der Schwenkachse gegenüberliegenden Seite eine weitere analoge Umlenkstrebe vorhanden ist und die beiden Umlenkstreben drehfest miteinander verbunden und drehbar um die Schwenkachse sind, wird durch Auslenken der Umlenkstrebe aus der Ebene der Wand heraus die doppellagige Folien-Wand am vorderen Ende durch diese beiden Umlenkstreben stark auseinander gespreizt, was das Reinigen der Folie auf den zueinander gekehrten Innen-Flächen mittels eines beispielsweise DampfStrahlers oder Hochdruckreinigers sehr erleichtert.

Analog kann auch das vordere Ende des Daches absenkbar auf die Oberseite der gestapelten Kisten sein oder hiervon nach oben anhebbar sein, um zum einen das Einfahren von beladenen Paletten zu erleichtern und im abgesenkten Zustand zum anderen das Anlegen der Folie des Daches auf der Oberseite der gestapelten Kisten zu fördern.

Der Temperiertunnel, also das ihn mit Umgebungsluft versorgende Gebläse, wird mittels einer Temperatur-Steuerung gesteuert:

Zu diesem Zweck besitzt der Temperiertunnel einen Temperatursensor, der in die äußere Schicht oder den Kern eines Produktes, beispielsweise eines Fleischstückes, eingesteckt wird, und zwar vorzugsweise in ein Produkt der obersten, vordersten Kiste.

Dieser Temperatursensor ist zum Beispiel mittels Kabel mit einer elektrischen Steuerung verbunden, die sich auf der Außenseite des vorderen Bereiches des Daches oder einer Außenwand befinden kann und dort auf einer Querstrebe zwischen den beiden seitlichen Rahmenteilen montiert sein kann. Diese Steuerung ist mit dem Gebläse auf dem rückseitigen Gebläsekasten elektrisch verbunden und setzt das Gebläse in Gang, sobald die Solltemperatur des Produktes, die der Temperatursensor misst, von einer vorgegebenen, definierten Temperatur um mehr als einen Toleranzbereich abweicht. Liegt die gemessene Temperatur innerhalb des Toleranzbereiches, wird das Gebläse abgeschaltet und gegebenenfalls die Frontseite geschlossen.

Je weiter die Ausgangs-Temperatur der Produkte von der vorgegebenen, definierten Zieltemperatur abweicht, umso deutlicher ergibt sich somit ein BetriebsZyklus, bei dem anfangs die Betriebs-Phasen des Gebläses sehr lang sind und von relativ kurzen Betriebs-Pausen unterbrochen werden, und wobei mit Zeitablauf die Betriebs-Pausen immer länger und die Betriebs-Phasen immer kürzer werden. In den Betriebs-Pausen findet eine Temperaturangleichung zwischen dem Kern des Produktes und der äußeren Schicht, in der sich der Temperatursensor befindet, statt.

Durch einen solchen Prozess-Zyklus wird in den Phasen, in denen ein Temperaturausgleich zwischen dem Kern und der äußeren Schicht im Produkt stattfindet, keine unnötige Energie durch Betrieb des Gebläses verschwendet und kein Fleischsaft aus den äußeren Schichten verschwendet und dadurch insbesondere auch nicht die Luft der Umgebung, bei der es sich in der Regel um einen Kühlraum handelt, unnützer Weise durch die Abwärme des den Gebläse antreibenden Motors erwärmt.

### c) Ausführungsbeispiele

Eine Ausführungsform gemäß der Erfindung ist im Folgenden beispielhaft anhand der Figuren näher beschrieben. Es zeigen:
- Figur 1:: eine perspektivische Ansicht des Temperiertunnels,
- Figur 2:: Ansichten des Rahmens, und
- Figur 3:: Details in der Aufsicht.

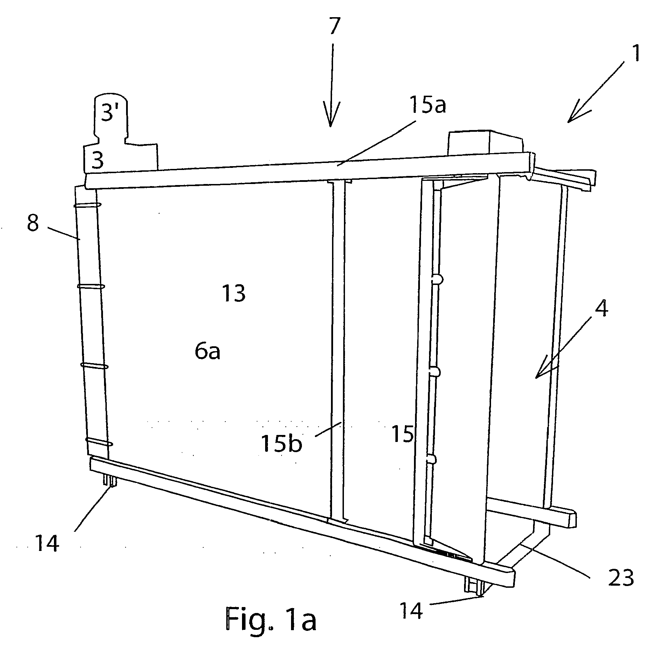

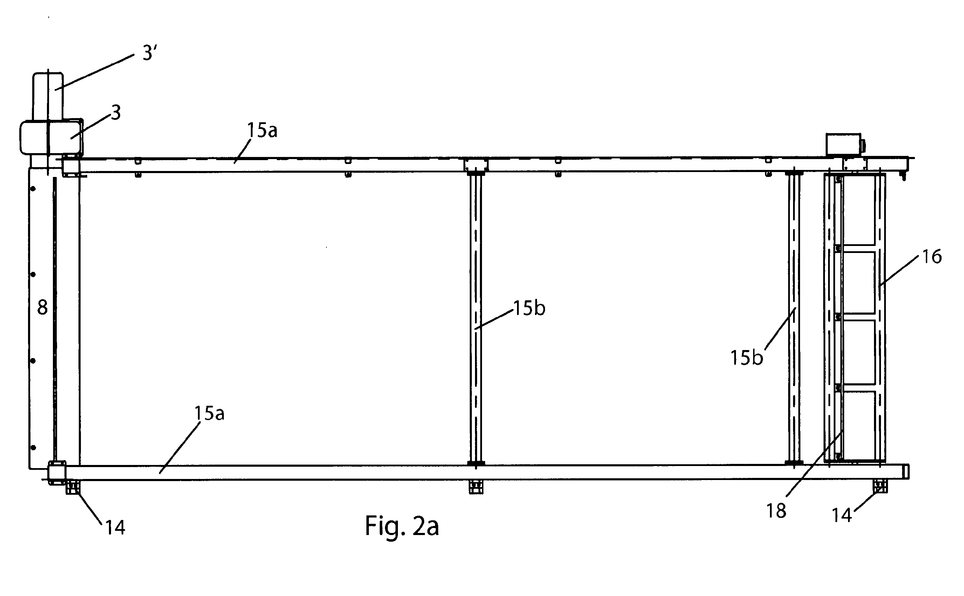

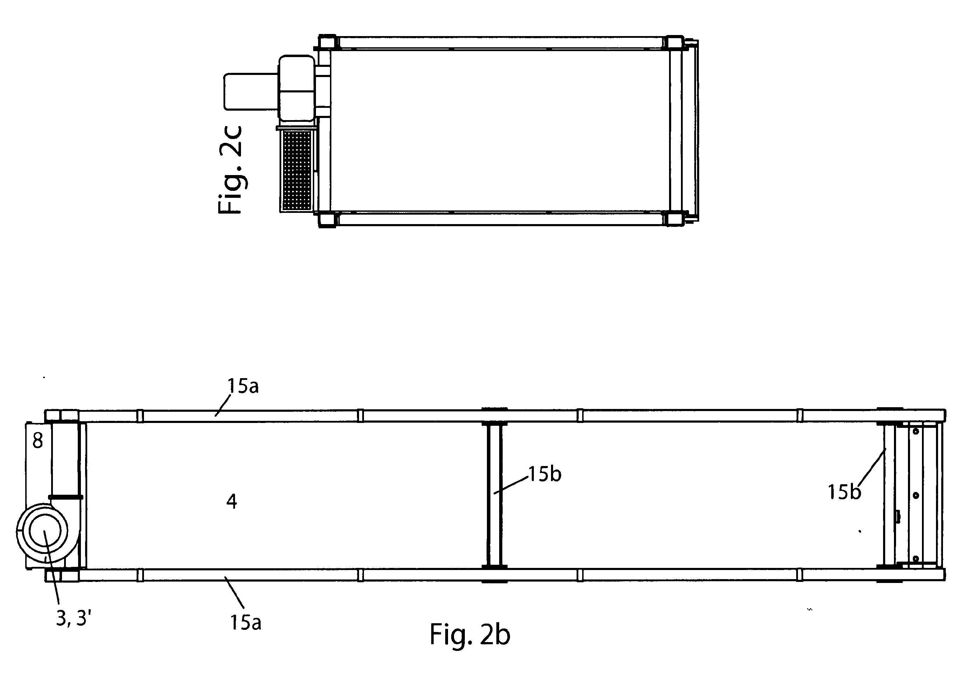

Figur 1a zeigt einen leeren Temperiertunnel 1, dessen Wände 6 a, b und Dach 7 aus Folie 13 bestehen, die an einem Rahmen 15 befestigt sind, wie auch alle anderen Komponenten des Temperiertunnels 1, wobei der Temperiertunnel 1 ohne Folie 13 in den Figuren 2 in einzelnen Ansichten dargestellt ist.

Daraus ist ersichtlich, dass der Temperiertunnel 1, dessen Innenraum 4 der Höhe und Breite von mit Kisten 21 voll gestapelten Paletten 20 entspricht, mittels den Wänden 6 und dem Dach 7 einen Tunnel bildet, dessen Boden vom Untergrund 22 gebildet wird, auf dem der Temperiertunnel 1 steht.

Die Wände 6 und das Dach 7 sind an einem tragenden Rahmen 15 befestigt, der aus horizontalen Längsstreben 15a entlang der Ober- und Unterkanten besteht, die an ihrem rückseitigen Ende entweder durch horizontale und vertikale Querstreben miteinander verbunden sind, oder vorzugsweise - wie im dargestellten Beispiel - direkt an einem stabilen Gebläsekasten 8 ansetzen, der den Innenraum 4 geringfügig nach hinten erweitert, und rückseitig, seitlich sowie unten und oben geschlossen ist und nach vorne an die Wände und das Dach dicht anschließt.

Die horizontalen Längsstreben 15a werden in der Mitte und im vorderen Bereich durch vertikale beziehungsweise horizontale Querstreben 15b stabil gegeneinander abgestützt.

An den unteren Längsstreben 15a sind im vorderen und hinteren Bereich Standfüße 14 befestigt, mit denen der Temperiertunnel 1 auf dem Untergrund 22 steht, und die möglichst niedrig sein sollen.

Zwischen den vorderen Enden der unteren Längsstreben 15a ist eine weitere Querstrebe 23 so montiert, dass sie sich unmittelbar über dem Untergrund 22 befindet, und darüber hinaus möglichst flach ausgebildet ist, um von den Rädern eines die Paletten 20 einfahrenden Staplers überrollt werden zu können.

Auf der Oberseite des Gebläsekastens 8 ist das darauf aufgesetzte Gebläse 3 mit dem Gebläse-Motor 3' zu erkennen.

In Figur 1a ist des weiteren im vorderen Bereich auf der dort vorhandenen Querstrebe 15b zwischen den beiden oberen Längsstreben 15a die Steuerung 12 zu sehen, die elektrisch sowohl mit dem Gebläse 3 als auch mit dem in Figur 2b angedeuteten Temperatursensor 9 verbunden ist.

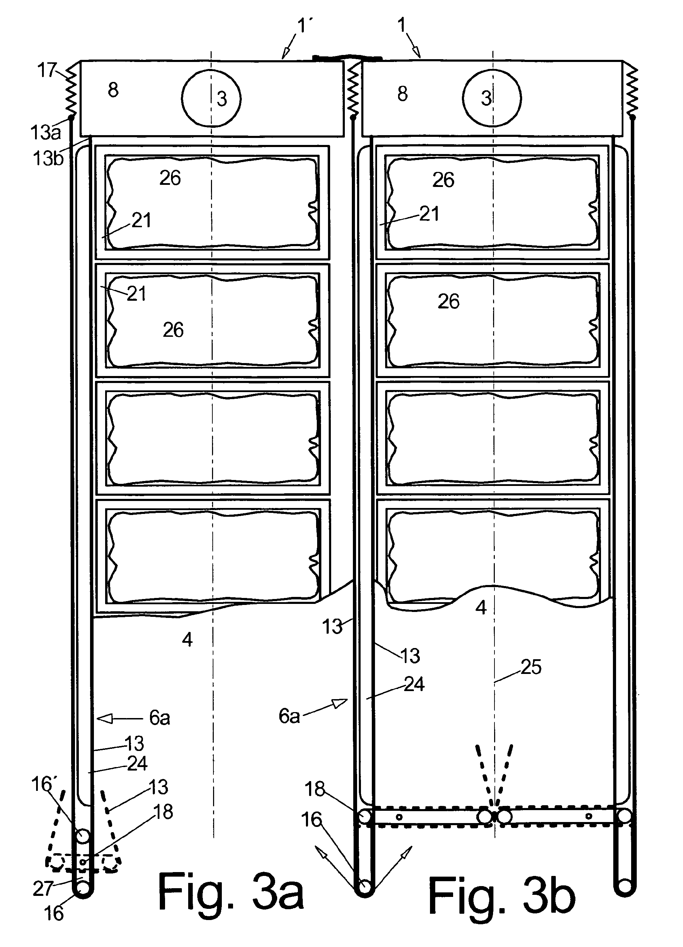

Die Figuren 3 zeigen in der Aufsicht von oben die Ausbildung zweier verschiedener Temperiertunnel 1, 1':

Dabei entspricht die Seitenwand der Figur 3a der in Figur 2a ohne Folie 13 dargestellten Lösung:

Abgesehen davon zeigt Figur 3b einen kompletten Temperiertunnel mit zwei Seitenwänden 6a, b.

Figur 3a zeigt dagegen einen Temperiertunnel 1', bei dem eine Seitenwand fehlt und der mit dieser offenen Seiten dicht an den vollständigen Temperiertunnel 1 herangeschoben ist, dessen doppelte Folienwände sich dann im Betrieb an je einem benachbarten Kistenstapel anlegen.

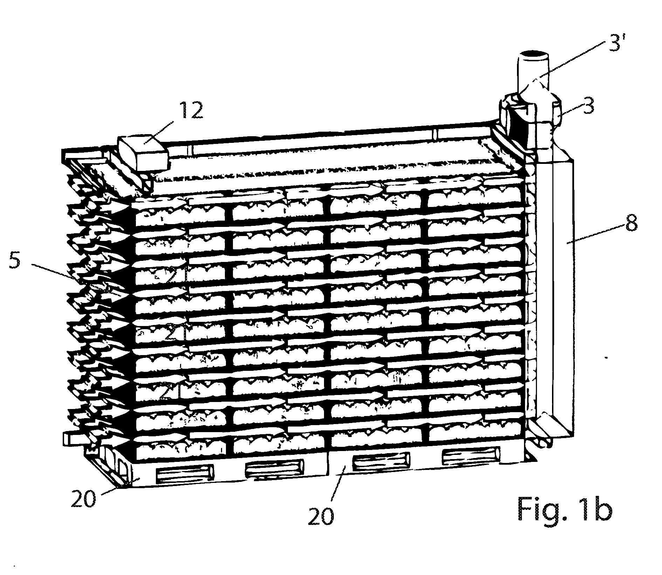

Die die Seitenwand 6 bildende Folie 13 ist am hinteren Ende des Gebläsekastens 8 mittels auf Zug belastbarer Federn 7, von denen mehrere in der Höhe übereinander angeordnet sind - wie auch in Figur 1 a zu erkennen - mit ihrem äußeren Ende 13a befestigt und verläuft von dort nach vorne bis zum vorderen Ende des Temperiertunnels 1, dort um eine vertikal stehenden Umlenkstrebe 16 herum wieder nach hinten bis zum Gebläsekasten 8, an dem das zweite Ende 13b der Folie 13 geringfügig gegenüber dem Ende 13a nach innen versetzt befestigt ist.

Damit die beiden Teile der Folie 13 beim Ansaugen an Außenflächen der Kisten 21 nicht aneinander anliegen, sind dazwischen, hier horizontal verlaufende, Abstands-Rippen 24 an dem weiter innen liegenden Abschnitt der Folie 13 angeordnet, die den außen liegenden Abschnitt hierzu auf Distanz halten.

Die vertikal stehende Umlenkstrebe 16 ist schwenkbar um eine ebenfalls vertikal stehende Schwenkachse 18. In der Ausgangslage befindet sich die Umlenkstrebe 16 ebenso wie die Schwenkachse 18 in der Ebene der Wand 6, die mit durchgezogenen Linien bei der Folie 13 dargestellt ist.

Bei der Lösung der Figur 3a sind im Ausgangszustand vor und hinter der Schwenkachse 18 im jeweils gleichen Abstand zwei Umlenkstreben 16 und 16' vorhanden, die über einen Hebelarm 27 miteinander verbunden und gemeinsam um die dazwischen liegende Schwenkachse 18 verschwenkbar sind. Im Falle eines solchen Doppelhebels werden die beiden Abschnitte der Folie 13 am vorderen Ende der Wand 6 zunehmend auseinander gespreizt, wodurch das Reinigen der gegeneinander gewandten Flächen der Abschnitte der Folie 13 erleichtert wird.

Die dadurch eintretende Veränderung an Längen-Bedarf an Folie 13 wird durch die in der Länge veränderbaren Federn 17 ausgeglichen.

Die Lösung der Figur 3b unterscheidet sich von derjenigen der Figur 3a dadurch, dass nur eine Umlenkstrebe 16 vorhanden ist, die sich in der Ausgangslage vor der Schwenkachse 18 befindet. Allerdings ist der Abstand zwischen den beiden deutlich größer und entspricht der halben Breite des Innenraumes 4 des Temperiertunnels 1.

Des weiteren kann die Umlenkstrebe 16 auch hier sowohl nach außen als auch nach innen verschwenkt werden, nach innen jedoch um mindestens 90°, so dass diese dann unmittelbar an der Vorderseite der vordersten Kisten 21 anliegt, da sich die Schwenkachse 18 unmittelbar vor dem vorderen Ende der vordersten Kisten 21 befindet. Dann deckt der von der Schwenkachse 18 zur Umlenkstrebe 16 verlaufende Teil der Folie 13 das vordere, sonst offene Ende des Temperiertunnels 1 und damit des Innenraumes 4 bis zur Längs-Mitte 25 hin ab, so dass darin befindliche Fleischstücke 26 rundum isoliert werden.

### BEZUGSZEICHENLISTE

- 1, 1': Temperiertunnel
- 2: Gehäuse
- 3: Gebläse
- 3': Gebläse-Motor
- 4: Innenraum
- 4 a, b: vorderes/hinteres Ende
- 5: Durchlass
- 6 a, b: Wand
- 7: Dach
- 8: Gebläsekasten
- 9: Temperatursensor
- 10: Längsrichtung
- 11: Querrichtung
- 12: Steuerung
- 13: Folie
- 13a, b: Ende
- 14: Standfuß
- 15: Rahmen
- 16, 16': Umlenkhebel
- 17: Feder
- 18: Schwenkachse
- 19: Kabel
- 20: Palette
- 21: Kiste
- 21 a, b: Front-/ Rückwand
- 22: Untergrund
- 23: Querstrebe
- 24: Abstands-Rippe
- 25: Längs-Mitte
- 26: Fleischstück

## Patentansprüche

1. Temperiertunnel (1) für auf Paletten (20) gestapelte, insbesondere mit Fleischstücken gefüllte, Kisten (21), mit
- einem vorne offenen Gehäuse (2),
- einem Gebläse (3), um Umgebungsluft in Längsrichtung (10) des Temperiertunnels (1) durch den Innenraum (4) des Gehäuses (2) zu transportieren,
- wobei in den gestapelten Kisten (21) Durchlässe (5) in den quer zur Längsrichtung (10) des Temperiertunnels (1) stehenden Front- und Rückwänden (21 a,b) der Kisten (21) vorhanden sind,
**dadurch gekennzeichnet, dass**
- das Gebläse (3) ein Saug-Gebläse am hinteren, geschlossenen Ende (4b) des Innenraumes (4) ist, und
- die Wände (6a, b) des Temperiertunnels (1) in Querrichtung (11) so beweglich sind, dass sie sich an die Außenflächen der gestapelten Kisten (21) anlegen können.

2. Temperiertunnel (1) nach Anspruch 1,
**dadurch gekennzeichnet, dass**
- das Gebläse (3) so dimensioniert ist, dass im Gebläsekasten (8) bei gefülltem Temperiertunnel (1) ein Unterdruck entsteht, und/oder
- das Dach (7) in der Höhe so beweglich ist, dass es sich an die Oberseite der gestapelten Kisten (21) anlegen kann.

3. Temperiertunnel (1) nach einem der vorhergehenden Ansprüche,
**dadurch gekennzeichnet, dass**
- das Gebläse (3) an einem Gebläse-Kasten (8) angeordnet ist, der sich am hinteren Ende (4b) des Innenraumes (4) befindet und über die gesamte Höhe der gestapelten Kisten (21) sowie insbesondere die gesamte Breite des Stapels erstreckt, und/oder
- die Wände (6a, b) und/oder das Dach (7) aus einer Folie (13) oder Platten bestehen.

4. Temperiertunnel (1) nach einem der vorhergehenden Ansprüche,
**dadurch gekennzeichnet, dass**
- das Gebläse (3) auf der Oberseite des hinteren Endes des Temperiertunnels (1), insbesondere auf der Oberseite eines Gebläsekastens (8), angeordnet ist und/oder
- der Gebläsekasten (8) maximal bis zur Unterkante der untersten Kiste (21) herab reicht.

5. Temperiertunnel (1) nach einem der vorhergehenden Ansprüche,
**dadurch gekennzeichnet, dass**
- die Wände (6) und das Dach (7) dicht aneinander anschließen, und/oder
- der Temperiertunnel (1) bodenlos ausgebildet ist.

6. Temperiertunnel (1) nach einem der vorhergehenden Ansprüche,
**dadurch gekennzeichnet, dass**
- die aus Folien (13) bestehenden Wände (6a,b) sowie das Dach (7) an einem tragenden Rahmen (15) des Temperiertunnels (1) angeordnet sind, der insbesondere auch die Laufrollen (14) trägt, und/oder
- die Wand (6) und insbesondere auch das Dach (7) aus Isolierfolie oder zwei beabstandeten Lagen von Folie (13) besteht.

7. Temperiertunnel (1) nach einem der vorhergehenden Ansprüche,
**dadurch gekennzeichnet, dass**
- auf wenigstens einer Lage der Folie (13) auf der zur anderen Lage derselben Folie (13) hin gerichteten Seite Abstands-Rippen (24) angeordnet sind, die insbesondere vertikal verlaufen, und/oder
- die zwei Lagen von Folie (13) eine einzige, um eine vordere Umlenkstrebe (16) herumgeführte Folie (13) ist, die mit ihren beiden freien Enden (13a,b) am hinteren Ende des Temperiertunnels (1), insbesondere am Gebläsekasten (8), dicht befestigt sind.

8. Temperiertunnel (1) nach einem der vorhergehenden Ansprüche,
**dadurch gekennzeichnet, dass**
- wenigstens das eine freie Ende der Folie (13) am hinteren Ende des Temperiertunnels (1) mittels eines Längenausgleiches, insbesondere mittels Federn (17), befestigt ist, und/oder
- die Umlenkstrebe (16) in Querrichtung (11) verschwenkbar um eine vertikal verlaufende Schwenkachse (18) ist, die insbesondere am Rahmen (15) und in der Verlaufsrichtung der Seitenwand (6) angeordnet ist.

9. Temperiertunnel (1) nach einem der vorhergehenden Ansprüche,
**dadurch gekennzeichnet, dass**
- bezüglich der Schwenkachse (18) gegenüberliegend von dem Umlenkhebel (16) ein weiterer Umlenkhebel (16') vorhanden ist, der mit dem Umlenkhebel (16) einen zweiarmigen Hebel bildet, der um die Schwenkachse (18) schwenkbar ist, und/oder
- der Umlenkhebel (16) bezüglich des Innenraumes (4) nach außen als auch nach innen schwenken kann.

10. Temperiertunnel (1) nach einem der vorhergehenden Ansprüche,
**dadurch gekennzeichnet, dass**
- der Umlenkhebel (16) von der Ruhelage fluchtend mit der Seitenwand (6) um 90° in Richtung Innenraum (4) schwenken kann und sein Abstand von der Schwenkachse (18) der halben in Querrichtung (11) gemessenen Breite des Innenraumes (4) entspricht, und/oder
- das vordere Ende des Daches (7) absenkbar mindestens bis auf die Oberseite der gestapelten Kisten (21), vorzugsweise auf eine Höhe darunter, ist.

11. Temperiertunnel (1) nach einem der vorhergehenden Ansprüche,
**dadurch gekennzeichnet, dass**
- der Temperiertunnel (1) einen Temperatursensor (9) aufweist, der in die Oberseite eines Fleischstückes, insbesondere eines der obersten Fleischstückes der vordersten Kiste (21), einsteckbar ist und über ein Kabel (19) oder per Funk mit der Steuerung (12) des Temperiertunnels (1) verbunden ist, und/oder
- die Steuerung (12) sich auf der Oberseite des Daches (7) oder auf der Aussenseite einer Wand (6) im vorderen Bereich des Temperiertunnels (1) befindet, und/oder
- die Kisten (21) in Querrichtung (11) dicht aneinandergrenzen.

12. Temperiertunnel (1) nach einem der vorhergehenden Ansprüche,
**dadurch gekennzeichnet, dass**
- der Anteil der Durchlässe (5) in den Front- und Rückenwänden (21 a, b) der Kisten (21), die in Querrichtung (11) stehen, maximal 10%, besser maximal 15%, besser maximal 20% der Gesamtfläche beträgt, und/oder
- die Unterkanten der Wände (6a,b) über eine flache Querstrebe (23) im vorderen Bereich des Temperiertunnels (1) miteinander verbunden sind.

13. Verfahren zum Temperieren von auf Paletten (20) gestapelten, mit insbesondere Fleischstücken gefüllten, Kisten (21) mittels eines Temperiertunnels (1) gemäß einem der vorhergehenden Ansprüche,
**dadurch gekennzeichnet, dass**
bei Durchströmung des Temperiertunnels (1) mit Umgebungsluft wenigstens die Wände (6a, b), und insbesondere auch das Dach (7) des Temperiertunnels (1) dicht an die gestapelten Kisten (21) angelegt werden.

14. Verfahren nach einem der vorhergehenden Verfahrensansprüche,
**dadurch gekennzeichnet, dass**
- im Temperiertunnel (1) stromabwärts der gestapelten Kisten (21) ein Unterdruck erzeugt wird, und/oder
- die Umgebungsluft im Temperiertunnel (1) in Strömungsrichtung nur durch die Durchlässe (5) in den Front- und Rückwänden (21 a,b) der Kisten (21) hindurch transportiert wird.

15. Verfahren nach einem der vorhergehenden Verfahrensansprüche,
**dadurch gekennzeichnet, dass**
- die Steuerung (12) das Gebläse (3) in Abhängigkeit der vom Temperatursensor (9) gemessenen Temperatur steuert und insbesondere mit Annäherung der Ist-Temperatur an die Soll-Temperatur der Produkte die Pausen zwischen den Betriebs-Phasen des Gebläses (3) immer größer werden, und/oder
- das Gebläse (3) abgeschaltet wird, wenn der Temperatursensor (9) eine definierte Temperatur, insbesondere die Soll-Temperatur misst, und das Gebläse (3) wieder eingeschaltet wird, wenn der Temperatursensor (9) eine um mehr als eine Toleranzschwelle von der definierten Temperatur abweichende Temperatur misst.

16. Verfahren nach einem der vorhergehenden Verfahrensansprüche,
**dadurch gekennzeichnet, dass**
- die hintersten gestapelten Kisten (21) dicht an den Gebläsekasten (8), an dem das Gebläse (3) sitzt, herangefahren wird, und/oder
- zum Reinigen die zwei Lagen einer doppellagigen Wand (6) auf Abstand gebracht werden, insbesondere durch Querstellen des Umlenkhebels (16, 16') zur Richtung der Seitenwand (6).

17. Verfahren nach einem der vorhergehenden Verfahrensansprüche,
**dadurch gekennzeichnet, dass**
zum seitlichen Aneinanderreihen von Temperiertunneln (1) der zweite und jeder weitere Temperiertunnel (1') nur jeweils eine Seitenwand (6a) besitzt.

## Claims

1. A tempering tunnel (1) for crates (21) stacked on pallets (20) and in particular filled with meat pieces, comprising:
- a housing (2) that is open in front;
- a blower (3) for transporting ambient air in longitudinal direction (10) of the tempering tunnel (1) through an interior (4) of the housing (2),
- wherein openings (5) are provided in the stacked crates (21) in the front- and rear walls (21 a, b) of the crates (21) which front- and rear walls are oriented transversal to the longitudinal direction (10) of the tempering tunnel (1),
- wherein the blower (3) is a suction blower at a rear closed end (4b) of the interior (4), and
- wherein walls (6a, b) of the tempering tunnel (1) are movable in transversal direction (11) so that they can contact outer surfaces of the stacked crates (21).

2. The tempering tunnel (1) according to claim 1,
- wherein the blower (3) is sized so that a negative pressure is generated in a blower case (8) when the tempering tunnel (1) is filled, and/or
- wherein the roof (7) is movable in elevation so that it can contact a top side of the stacked crates (21).

3. The tempering tunnel (1) according to one of the preceding claims,
- wherein the blower (3) is arranged at the blower case (8) which is arranged at a rear end (4b) of the inner cavity (4) and extends over the entire height of the stacked crates (21) and in particular over the entire width of the stack, and/or
- wherein the walls (6a, b) and/or the roof (7) are made from a foil (13) or plates.

4. The tempering tunnel (1) according to one of the preceding claims,
- wherein the blower (3) is arranged on a top side of the rear end of the tempering tunnel (1), in particular on a top side of a blower case (8), and/or
- wherein the blower case (8) reaches at the most downward to a lower edge of the lowest crate (21).

5. The tempering tunnel (1) according to one of the preceding claims,
- wherein the walls (6) and the roof (7) adjoin one another tight and/or
- wherein the tempering tunnel (1) is configured without a base.

6. The tempering tunnel (1) according to one of the preceding claims,
- wherein the walls (6a, b) made from foils (13) and the roof (7) are arranged at a supporting frame (15) of the tempering tunnel (1) which in particular also supports the running rollers (14), and/or
- wherein the wall (6) and in particular also the roof (7) are made from insulating foil and/or two offset layers of foil (13).

7. The tempering tunnel (1) according to one of the preceding claims,
- wherein spacer ribs (24) are arranged at least on one layer of the foil (13) on a side oriented towards another layer of the foil (13), wherein the spacer ribs extend in particular in vertical direction and/or
- wherein the two layers of foil (13) are provided as a single foil (13) which is run around a forward deflection strut (16), wherein the foil (13) with both its free ends (13a, b) is attached tight at the rear end of the tempering tunnel (1), in particular at the blower case (8).

8. The tempering tunnel (1) according to one of the preceding claims,
- wherein at least the free end of the foil (13) is attached at a rear end of the tempering tunnel (1) through a length compensation, in particular through springs (17) and/or,
- wherein the deflection strut (16) is pivotable in transversal direction (11) about a vertically extending pivot axis (18) which is arranged in particular at the frame (15) and in the extension direction of the sidewall (6).

9. The tempering tunnel (1) according to one of the preceding claims,
- wherein an additional deflection lever (16') is provided opposite to the deflection lever (16) with respect to the pivot axis (18), wherein the additional deflection lever forms a two-arm lever with the deflection lever (16), wherein the two arm lever is pivotable about the pivot axis (18), and/or
- wherein the deflection lever (16) is pivotable towards an outside and also towards an inside with respect to the inner cavity (4).

10. The tempering tunnel (1) according to one of the preceding claims,
- wherein the deflection lever (16) is pivotable from an idle position where it is aligned with the sidewall (6) by 90° in a direction towards the inner cavity (4) and its distance from the pivot axis (18) corresponds to half a width of the inner cavity (4) that is measured in transversal direction (11), and/or
- wherein a front end of the roof (7) can be lowered at least to a top side of the stacked crates (21), preferably to an elevation below that.

11. The tempering tunnel (1) according to one of the preceding claims,
- wherein the tempering tunnel (1) includes a temperature sensor (9) which is insertable into a top side of a meat piece, in particular one of the uppermost meat pieces of the most forward crate (21) and connected through a cable (19) or via radio with a control (12) of the tempering tunnel (1), and/or
- wherein the control (12) is arranged at the top side of the roof (7) or on an outside of a wall (6) in a forward portion of the tempering tunnel (1), and/or
- wherein the crates (21) tightly adjoin one another in transversal direction (11).

12. The tempering tunnel (1) according to one of the preceding claims,
- wherein a portion of the openings (5) in the front- and backside walls (21 a, b) of the crates (21) which are oriented in transversal direction (11) is 10 % at the most, better 15 % at the most, better 20 % at the most of the total surface, and/or
- wherein the lower edges of the walls (6a, b) are connected with one another through a flat transversal strut (23) in a forward portion of the tempering tunnel (1).

13. A method for tempering crates (21) that are stacked on pallets (20) and in particular filled with meat pieces through a tempering tunnel (1) according to one of the preceding claims, wherein at least the walls (6a, b) and in particular also the roof (7) of the tempering tunnel (1) are nestled tight against the stacked crates (21) when the tempering tunnel (1) is flowed through with ambient air.

14. The method according to one of the preceding method claims,
- wherein a negative pressure is generated in the tempering tunnel (1) downstream from the stacked crates (21) and/or
- wherein the ambient air is transported in the tempering tunnel (1) in flow direction only through openings (5) in the front- and rear walls (21 a, b) of the crates (21)**.**

15. The method according to one of the preceding method claims,
- wherein the control (12) controls the blower (3) as a function of a temperature measured by the temperature sensor (9) and pauses between operating phases of the blower become longer and longer, in particular when the actual temperature approaches the target temperature of the products, and/or
- wherein the blower (3) is switched off when the temperature sensor (9) measures a defined temperature, in particular the target temperature, and the blower (3) is turned on again when the temperature sensor (9) measures a temperature that deviates from the defined temperature by more than a tolerance threshold.

16. The method according to one of the preceding method claims,
- wherein the rearmost stacked crates (21) are moved close to the blower case (8) at which the blower (3) is arranged, and/or
- wherein two layers of a double layer wall (6) are placed at a distance from one another for cleaning, in particular by placing the deflection lever (16, 16') transversal to the orientation of the sidewall (6).

17. The method according to one of the preceding method claims, wherein for laterally adjoining tempering tunnels (1), a second tempering tunnel and each additional tempering tunnel (1') respectively only includes one sidewall (6a).

## Revendications

1. Tunnel de maintien en température (1) pour des caisses (21) remplies en particulier de morceaux de viande, empilées sur des palettes (20),
- avec un carter (2) ouvert devant,
- un ventilateur (3) pour transporter l'air ambiant dans la direction longitudinale (10) du tunnel de maintien en température (1) à travers l'espace intérieur (4) du carter (2),
- dans les caisses empilées (21), des passages (5) étant prévus dans les parois arrière et avant (21 a, b) des caisses (21) qui sont transversales à la direction longitudinale (10) du tunnel de maintien en température (1),
**caractérisé en ce que**
- le ventilateur (3) est un ventilateur aspirant sur l'extrémité arrière fermée (4b) de l'espace intérieur (4), et
- les parois (6a, b) du tunnel de maintien en température (1) sont mobiles dans la direction transversale (11) de manière à pouvoir s'appliquer contre les surfaces externes des caisses empilées (21).

2. Tunnel de maintien en température selon la revendication 1, **caractérisé en ce que**
- le ventilateur (3) est dimensionné de sorte que dans le carter de ventilateur (8), il est généré une dépression quand le tunnel de maintien en température (1) est rempli,
- le toit (7) est mobile en hauteur de à pouvoir s'appliquer contre la surface supérieure des caisses empilées (21).

3. Tunnel de maintien en température selon l'une des revendications précédentes, **caractérisé en ce que**
- le ventilateur (3) est disposé sur un carter de ventilateur (8), qui se trouve sur l'extrémité arrière (4b) de l'espace intérieur (4) et s'étend sur l'ensemble de la hauteur des caisses empilées (21) ainsi en particulier sur l'ensemble de la largeur de la pile, et/ou
- les parois (6, b) et/ou le toit (7) se composent d'une feuille (13) ou de plaques.

4. Tunnel de maintien en température (1) selon l'une des revendications précédentes, **caractérisé en ce que**
- le ventilateur (3) est disposé sur la face supérieure de l'extrémité arrière du tunnel de maintien en température (1), en particulier sur la face supérieure d'un carter de ventilateur (8),
- le carter de ventilateur (8) s'étend au maximum jusqu'au bord inférieur de la caisse la plus basse (21).

5. Tunnel de maintien en température (1) selon l'une des revendications précédentes, **caractérisé en ce que**
- les parois (6) et le toit (7) sont contigus entre eux et/ou
- le tunnel de maintien en température (1) est réalisé sans fond.

6. Tunnel de maintien en température (1) selon l'une des revendications précédentes, **caractérisé en ce que**
- les parois (6a, b) se composant de feuilles (13) ainsi que le toit (7) sont disposés sur un cadre porteur (15) du tunnel de maintien en température (1) qui porte en particulier également les galets de roulement (14), et/ou
- la paroi (6) et en particulier le toit (7) se composent de couche isolante ou deux couches espacées de feuille (13).

7. Tunnel de maintien en température (1) selon l'une des revendications précédentes, **caractérisé en ce que**
- sur au moins une couche de la feuille (13), sont disposées des nervures d'espacement (24) sur la face dirigée en direction de l'autre couche de cette feuille (13), lesquelles nervures s'étendent en particulier verticalement, et/ou
- les deux couches de feuille (13) est une feuille unique (13) guidée autour d'un levier de renvoi (16), qui est fixée étroitement par ses extrémités libres (13a, b) sur l'extrémité arrière du tunnel de maintien en température (1), en particulier sur le canal de ventilateur (8).

8. Tunnel de maintien en température (1) selon l'une des revendications précédentes, **caractérisé en ce qu'**
- au moins une extrémité libre de la feuille (13) est fixé sur l'extrémité arrière du tunnel de maintien en température (1) au moyen d'un compensateur de longueur, en particulier au moyen de ressorts (17), et/ou
- le levier de renvoi (16) est pivotant dans la direction transversale (11) autour d'un axe de pivotement vertical (18) qui est disposé en particulier sur le cadre (15) et dans le sens de défilement de la paroi latérale (6).

9. Tunnel de maintien en température (1) selon l'une des revendications précédentes, **caractérisé en ce que**
- par rapport à l'axe de pivotement (18) il est prévu à l'opposé du levier de renvoi (16) un autre levier de renvoi (16') qui forme avec le levier de renvoi (16) un levier à deux bras, qui est pivotant autour de l'axe de pivotement (18), et/ou
- le levier de renvoi (16) peut basculer par rapport à l'espace intérieur (4) vers l'extérieur ou vers l'intérieur.

10. Tunnel de maintien en température (1) selon l'une des revendications précédentes, **caractérisé en ce que**
- le levier de renvoi (16) peut basculer de la position de repos alignée avec la paroi latérale (6) de 90° en direction de l'espace intérieur (4) et sa distance de l'axe de pivotement (18) correspond à la moitié de la largeur mesurée dans la direction transversale (11), de l'espace interne (4), et/ou
- l'extrémité avant du toit (4) peut être abaissée au moins jusqu'à la face supérieure des caisses empilées (21) de préférence à une hauteur juste en dessous.

11. Tunnel de maintien en température (1) selon l'une des revendications précédentes, **caractérisé en ce que**
- le tunnel de maintien en température (1) présente une sonde thermique (9) qui peut être introduite dans la face supérieure d'un morceau de viande en particulier d'un des morceaux de viande supérieurs de la caisse avant (21), et est reliée par un câble (19) ou par radio à la commande (12) du tunnel de maintien en température (1), et/ou
- la commande (12) se trouve sur la face supérieure du toit (7) ou sur la face externe d'une paroi (6) dans la zone avant du tunnel de maintien en température (1), et/ou
- les caisses (21) sont contiguës dans la direction transversale (11).

12. Tunnel de maintien en température (1) selon l'une des revendications précédentes, **caractérisé en ce que**
- la part des passages (5) dans les parois avant et arrière (21 a, b) des caisses (21) qui sont dans la direction transversale (11), s'élève à maximal 10 %, au mieux maximum 15 %, au mieux maximal 20 % de l'ensemble de la surface, et/ou
- les bords inférieurs des parois (6a, b) sont reliés entre eux par une traverse plate (23) dans la zone avant du tunnel de maintien en température (1).

13. Procédé pour le maintien en température de caisses (21) remplies en particulier de morceaux de viande, empilées sur des palettes (20) au moyen d'un tunnel de maintien en température (1), selon l'une des revendications précédentes,
**caractérisé en ce que**
lors de la traversée du tunnel de maintien en température (1) par l'air ambiant, au moins les parois (6a, b) et en particulier également le toit (7) du tunnel de maintien en température (1) sont appliqués étroitement contre les caisses empilées (21).

14. Procédé selon l'une des revendications précédentes, **caractérisé en ce que**
- dans le tunnel de maintien en température (1), une dépression est générée en aval des caisses empilées (21), et/ou
- l'air ambiant n'est transporté dans le tunnel de maintien en température (1) dans la direction d'écoulement que par les passages (5) dans les parois arrière et avant (21 a, b) des caisses (21).

15. Procédé selon l'une des revendications précédentes, **caractérisé en ce que**
- la commande (12) commande le ventilateur (3) en fonction de la température mesurée par la sonde thermique (9) et en particulier, les pauses entre les phases de service du ventilateur (3) sont de plus en plus longues quand la température réelle des produits se rapproche de la température théorique et/ou
- le ventilateur (3) est arrêté quand la sonde thermique (9) mesure une température définie, en particulier la température théorique et le ventilateur (3) est à nouveau mis en route quand la sonde thermique (9) mesure une température divergeant de la température définie au-delà d'un seuil de tolérance.

16. Procédé selon l'une des revendications précédentes, **caractérisé en ce que**
- les caisses (21) empilées le plus à l'arrière sont amenées tout près du carter de ventilateur (8) sur lequel repose le ventilateur (3), et/ou
- pour le nettoyage, les deux couches d'une paroi double couche (6) sont amenées à distance, en particulier par placement transversal du levier de renvoi (16, 16') en direction de la paroi latérale (6).

17. Procédé selon l'une des revendications précédentes, **caractérisé en ce que** pour la juxtaposition latérale de tunnels de maintien en température (1), le second et chaque autre tunnel de maintien en température (1') ne possèdent respectivement qu'une paroi latérale (6a).
